# EUROPEAN PATENT APPLICATION

(11) **EP 4 011 849 A1**
(43) Date of publication of application: **15.06.2022**
(21) Application number: 20020604.3
(22) Date of filing: 10.12.2020
(51) Int. Cl.: C04B 7/36

(54) **METHOD OF PRODUCING A SYNTHETIC CARBONATED MINERAL COMPONENT IN A CEMENT MANUFACTURING PLANT**

(71) Applicant: Holcim Technology Ltd, 6300 Zug (CH)
(72) Inventor: Durant, Thomas, CH-5113 Holderbank (CH); Morin, Vincent, CH-5113 Holderbank (CH); Huet, Bruno, CH-5113 Holderbank (CH); Meyer, Vincent, CH-5113 Holderbank (CH)
(74) Representative: Keschmann, Marc

(57) **Abstract**

A method of producing a synthetic carbonated mineral component in a cement manufacturing plant, comprising the steps of providing a carbonatable substance from an external source, introducing the carbonatable substance into an exhaust gas installation of the cement manufacturing plant for contacting the carbonatable substance with CO₂ enriched exhaust gas, carbonating the carbonatable substance by reacting the carbonatable substance with CO₂ contained in the CO₂ enriched exhaust gas, thereby obtaining the synthetic carbonated mineral component, and removing the synthetic carbonated mineral component from the exhaust gas installation.

## Description

The invention relates to a method of producing a synthetic carbonated mineral component in a cement manufacturing plant, wherein the cement manufacturing plant comprises a calcination device for producing Portland clinker by decarbonating cement raw meal while releasing a CO₂ enriched exhaust gas and further comprising an exhaust gas installation for directing a flow of the CO₂ enriched exhaust gas from the calcination device to an exhaust stack of the cement manufacturing plant.

In known processes for producing cement clinker, raw meal is fed into a calcination device, in particular a rotary kiln, after it has been preheated and partially decarbonated in a multistage preheater system by using the heat of combustion gases exhausted from the rotary kiln. The preheated raw material is fed into the rotary kiln via the kiln inlet and travels to the kiln outlet while being calcined at temperatures of up to 1400°C.

Carbon dioxide (CO₂) is the most significant long-lived greenhouse gas in the Earth's atmosphere. The use of fossil fuels and deforestation have rapidly increased its concentration in the atmosphere, leading to global warming. Carbon dioxide also causes ocean acidification, because it dissolves in water to form carbonic acid.

The cement industry is an important emitter of CO₂. Within the cement production process, significant amounts of CO₂ are generated during the decarbonation of raw meal (containing CaCO₃) to lime (CaO). During the production of Portland cement clinker about 0,9 tons of CO₂ per ton of Portland cement clinker are emitted by the calcination of the raw materials and from the fuel combustion in the rotary kiln.

The use of alternative fuels, in particular renewable fuels, in the rotary kiln burner may reduce the amounts of greenhouse gases. However, substantial amounts of CO₂ are still produced by the decarbonation of raw meal and emitted into the atmosphere.

It has been proposed to use carbon capture and sequestration methods in order to reduce or prevent the emission of CO₂ from industrial processes into the atmosphere. Such methods comprise capturing CO₂ from flue gases for storage or for use in other industrial applications. However, such methods require the separation of CO₂ form the flue gases, wherein respective separation plants involve high capital and operating expenditures.

EP 3656750 A2 discloses a method for using the CO₂ contained in an exhaust gas of a cement manufacturing plant for carbonating carbonatable waste material, such as concrete demolition waste, fly ash or slag, wherein the carbonated waste material can be used as a supplemental cementitious material in cement compositions. The carbonation is carried out in a wet scrubber, a semi-dry scrubber or a dry scrubber, so that a separate installation is needed for the carbonation process. Therefore, a disadvantage of the method is that it requires high capital expenditures.

Therefore, the instant invention aims at further reducing the CO₂ footprint of a cement plant without significantly increasing the capital and operating expenditures.

In order to solve these objectives, the invention provides a method of producing a synthetic carbonated mineral component in a cement manufacturing plant, wherein the cement manufacturing plant comprises a calcination device for producing Portland clinker by decarbonating cement raw meal while releasing a CO₂ enriched exhaust gas and further comprising an exhaust gas installation for directing a flow of the CO₂ enriched exhaust gas from the calcination device to an exhaust stack of the cement manufacturing plant,
wherein the method comprises the steps of:
a) providing a carbonatable substance from an external source,
b) introducing the carbonatable substance into the exhaust gas installation for contacting the carbonatable substance with the CO₂ enriched exhaust gas,
c) carbonating the carbonatable substance by reacting the carbonatable substance with CO₂ contained in the CO₂ enriched exhaust gas, thereby obtaining the synthetic carbonated mineral component,
d) removing the synthetic carbonated mineral component from the exhaust gas installation.

The invention is based on the idea to carbonate a carbonatable substance by injecting it directly into the gas streams of a Portland clinker manufacturing process that is enriched in carbon dioxide. In this way, the carbon dioxide generated within the clinker manufacturing process by the combustion of fuels and by the decarbonation of raw meal is directly used within the existing process and its content in the exhaust gas is thus reduced. In other words, an in-situ carbonation of carbonatable substances, such as waste materials, is integrated into the clinker manufacturing process of a cement plant. The in-situ carbonation process does not require any separate installations and therefore minimizes the capital expenditures needed for the carbonation process.

Rather, the existing exhaust gas installation is used for the carbonation process, i.e. the structural components of the cement plant that allow the CO₂ enriched exhaust gas to flow from the calcination device to an exhaust stack of the cement manufacturing plant. In most cement plants, two main CO₂ enriched exhaust gas streams are existing. The first exhaust gas stream is coming from the preheater of the cement plant, in which cement raw meal is preheated in counter-current flow to exhaust gas coming from the calcination device, i.e. the rotary kiln. When the preheater includes a Lepol heat exchanger, the preheating is done in a cross-current flow to the exhaust gas. This first stream is guided from the preheater exhaust gas outlet to an exhaust stack via a plurality of exhaust gas installation components, such as gas conditioning tower, raw meal mill, a filter unit and various ducts that interconnect said components. The second exhaust gas stream is coming from the kiln bypass that is used to extract kiln bypass dust from the calcination device, i.e. the rotary kiln. The second stream is guided from the kiln bypass to an exhaust stack via a plurality of exhaust gas installation components, such as a quenching chamber, a filter unit and various ducts that interconnect said components.

The carbonatable material may generally be added to the first stream and/or the second stream at any suitable point thereof. However, it is preferably avoided to add the carbonatable substance at a point, where the carbonatable substance could be mixed with a non-hydraulic dust.

The carbonation step may be carried out at various temperature ranges. The temperature of the CO₂ enriched exhaust gas decreases as it flows from the calcination device towards the exhaust stack. Therefore, the carbonation temperature depends on at which distance from the calcination device the carbonatable substance is introduced into the exhaust gas installation.

Two possible temperature ranges are preferred:
- a low temperature range between 100 and 300°C, preferably between 110 and 220°C. This low temperature range can be obtained by mixing "cold" and potentially wet carbonatable material (0-120°C) with limited quantity of preheater exhaust gas (200-450°C), typically in a raw meal mill, and
- a higher temperature range between 400 and 1 000°C, preferably between 500°C and 900°C, even more preferably between 500°C and 700°C.

The carbonation at the lower temperature range can be carried out in any point between the preheater gas outlet and the kiln production filter or before the chlorine bypass filter. In this atmosphere the content of carbon dioxide is around 5 to 20%, and that of water is between 2-15%. This environment enables the calcium silicate hydrates eventually contained in the carbonatable substance to recarbonate, providing calcium carbonates and fine silica.

The carbonation at the higher temperature range can be achieved by injecting the carbonatable substance in the quenching air of a cement kiln bypass probe. This injection further contributes to the quenching and chlorine dust dilution, and reduces fresh air dilution, improving the carbon dioxide content of the exhaust gas and lowering the size of the bypass filter. The bypass can be adapted with a 2-stage cooling step to increase and ensure residence time at this temperature, and increase the carbonation rate of the carbonatable material.

More specifically, the following preferred embodiments can be mentioned.

According to a first preferred embodiment, the exhaust gas installation comprises a cement kiln bypass installation for extracting kiln bypass dust and exhaust gas from the calcination device, and a bypass filter connected to an exhaust end of the kiln bypass installation, wherein the step of introducing the carbonatable substance into the exhaust gas installation comprises introducing the carbonatable substance into the kiln bypass installation upstream of the bypass filter, and wherein the step of removing the synthetic carbonated mineral component from the exhaust gas installation comprises separating the synthetic material from the exhaust gas by means of said bypass filter and removing the synthetic material from the bypass filter. Here, the advantage is that an existing component of the cement plant, the bypass filter, is used to extract the synthetic material from the exhaust gas after having been carbonated.

According to another preferred embodiment, the kiln bypass installation comprises a quenching chamber for cooling the kiln bypass dust and the exhaust gas, and wherein the carbonatable substance is introduced into the quenching chamber.

The carbonatable substance can be introduced into the quenching chamber together with the quenching air. In this connection, a preferred embodiment provides that a quenching air duct is connected to the quenching chamber for introducing quenching air into the quenching chamber, and wherein the carbonatable substance is introduced into the quenching chamber via the quenching air duct.

According to another preferred embodiment, the cement manufacturing plant comprises a preheater for preheating the cement raw meal in counter or cross current to the exhaust gas, and optionally an exhaust gas conditioning tower for conditioning the exhaust gas coming from the preheater, a raw meal mill to dry and grind raw material and wherein the exhaust gas installation comprises an exhaust gas duct arranged downstream of the preheater or the exhaust gas conditioning tower for directing the exhaust gas to a main filter, and wherein the step of introducing the carbonatable substance into the exhaust gas installation comprises introducing the carbonatable substance into the exhaust gas flow at a location between the preheater and the main filter, and wherein the step of removing the synthetic carbonated mineral component from the exhaust gas installation comprises separating the synthetic material from the exhaust gas by means of said main filter and removing the synthetic material from the main filter.

Preferably, when the raw meal mill is not in operation or in design where there is no raw meal mill between preheater and main filter, the carbonatable substance may be introduced into the exhaust gas conditioning tower to avoid decantation or introduced into the exhaust gas duct upstream of the main filter. In particular, the carbonatable substance may be introduced into the inlet duct of the main filter.

Another possible embodiment consists in injecting carbonatable material into the raw meal mill. Generally, the production capacity of the raw meal mills exceeds that of the kiln, which translates into downtime for the raw meal mills. In this case, raw meal mills can be operated in batches with only carbonatable materials. In this configuration, carbonatable materials are fed directly into the raw meal mill, where it is dried, ground and partly to totally carbonated.

To increase the carbonation rate of the carbonatable substance, the residence time of the carbonatable material can be increased by creating a recirculation of the substance back to the introduction site, such as the main filter inlet duct or raw meal mill inlet. In this connection, a preferred embodiment provides that the synthetic carbonated mineral component, after step d) is reintroduced into the exhaust gas installation (step b)) and steps c) and d) are repeated.

Generally speaking, the carbonation is conducted until the carbonatable substance has turned into a synthetic carbonated mineral component having pozzolanic properties. For example, the carbonation is conducted until the CaCO₃ content of the carbonatable substance has increased by least 5 wt.-%, preferably by at least 10 wt.-%, that is the CaCO₃ content of the carbonatable substance has increased from x% to (x+5)%, preferably from x% to (x+10)%.

Being a synthetic carbonated mineral component and due to its pozzolanic properties, the carbonated material can be used in cementitious compositions as a replacement material for Portland cement. In this way, the Portland clinker content and thus the CO₂ footprint of the composition may be reduced.

Preferably, the synthetic carbonated mineral component obtained from the process of the invention may be mixed with the Portland clinker coming from the calcination device of the same plant and optionally co-ground in a cement mill.

Alternatively, the synthetic carbonated mineral component obtained from the process of the invention may be mixed with a Portland cement in a mixing process. In this case, the synthetic carbonated mineral component is preferentially separately ground beforehand to increase its fineness, and increase its pozzolanic activity.

Depending on the effective pozzolanic activity of the synthetic carbonated mineral component and other characteristics such as water demand, the clinker amount in the Portland cement can be adapted to produce the cement having the desired performance in terms of setting times and strength development.

The synthetic carbonated mineral component can be used as is and blended in a CEM I, or optionally pre-ground prior to blending to reach a specific fineness, or co-ground with the other cement components.

If the carbonation step occurs in the main filter, in the raw meal mill, or in the gas bypass filter, the carbonated material further contains chlorides and alkalis, which improve the reactivity of this material when used as a mineral component in cement compositions.

Additionally, the carbonation of these materials also ensures that the free lime in the material is carbonated, and therefore eliminated. This solves additional durability problems caused by excess free lime in binders.

The carbonatable substance may be any carbon dioxide reactive solid substance that can be carbonated when being contacted with the CO₂ enriched exhaust gas. According to the invention, the carbonatable substance is taken from an external source, which means that it is a material that is not inherent in a Portland clinker manufacturing process. Therefore, the carbonatable substance excludes any material flow usually occurring in a cement plant, such as raw meal, preheated raw meal, pre-calcined raw meal, Portland clinker and cement kiln dust.

Preferably, a waste material can be used as a source for the carbonatable material so that such waste material can be recycled. The carbonatable waste material can be selected from the fine fractions of recycled concrete, a concrete mud from a ready-mix plant, or any mineral component with a sufficient amount of metal oxide that is able to carbonate, or mixtures thereof. Preferably, the metal oxide is calcium oxide, or magnesium oxide, or mixtures thereof.

The carbonatable substance can be any material defined in the standard EN 197-1 published in April 2012, as long as the total metal oxide content, such as the CaO content, in the carbonatable substance is at least 10 wt.-%, preferably at least 30 wt.-%. Blast furnace slag or fly ash having a high calcium oxide content are for example suitable for being used as the carbonatable substance.

Further, the carbonatable substance may be a concrete mud that is obtained by recuperating mud from a decantation basin in a concrete ready-mix plant and reducing the water content of the mud. The excess water of the concrete mud may be removed by known processes such as a filter press, or by making use of a heated screw integrated in the cement process. The concrete mud can be pre-dried in order to reduce its free water content to 25 wt.-% or lower, preferably 20 wt.-% or lower. Free water is defined by water that is able to evaporate at temperatures below 105°C.

The concrete mud can be further dried in the raw meal mill or in a dedicated mill fed by exhaust gas coming from the preheater.

According to a further preferred embodiment, the carbonatable material is obtained from recycled concrete by crushing recycled concrete, separating a fine fraction of said crushed recycled concrete from a coarse fraction and using the fine fraction as said carbonatable material, wherein the fine fraction is preferably composed of particles having a particle size of 0-4mm, preferably 0-3mm, in particular 0-2mm. This fine fraction is composed of hardened cement paste, and fine quartz or limestone sand coming from the sand in the recycled concrete.

The method of the present invention further contains an optional step of grinding and drying the carbonatable substance. The substance may be pre-ground in order to increase the specific surface area of the powder, and increase its potential to carbonate.

This optional grinding step of the fine fraction can for example be carried out using a ball or a vertical mill, either fed by atmospheric gas for drying only, or by exhaust gas to also carbonate, like a raw meal mill. Cement paste would be deagglomerated from aggregates by attrition. The finer ground material may be separated by means of a dynamic or a static separator. The rejects of the separator may be removed from the system, and be for example reused as a silica additive in the cement plant for the production of clinker.

When the carbonatable substance is construction demolition waste, it may further contain chlorine bypass dust that is produced at the cement plant. The carbonatable substance may contain chlorine bypass dust in an amount of between 0,1 and 60 wt.-%, preferably between 10 and 50 wt.-%, of the carbonatable substance.

The invention will now be described in more detail with reference to the attached drawings. Therein, Fig. 1 shows a first layout of a cement plant for carrying out the method of the invention, Fig. 2 shows a second layout of a cement plant for carrying out the method of the invention, Fig. 3 shows a third layout of a cement plant for carrying out the method of the invention, and Fig. 4 shows a fourth layout of a cement plant for carrying out the method of the invention.

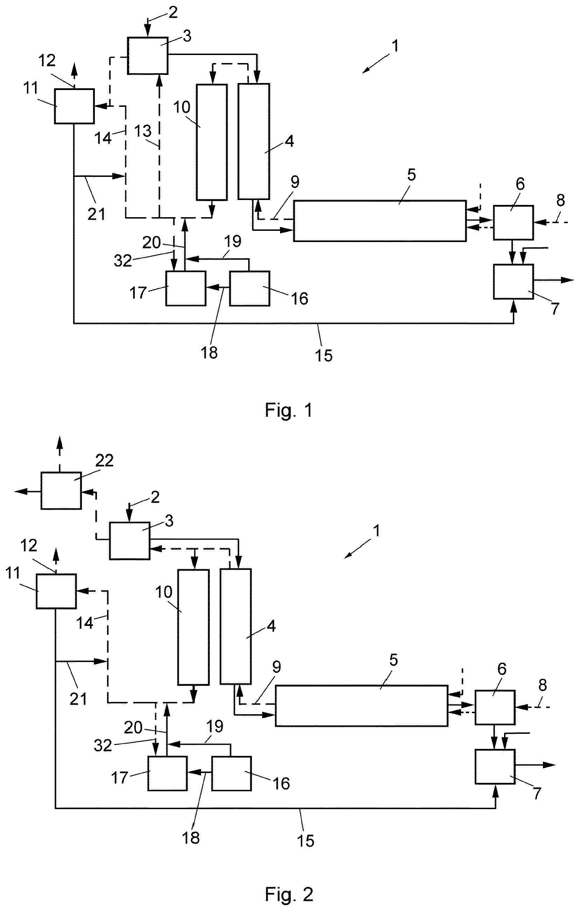

Fig. 1 schematically illustrates a cement plant for carrying out the method of the invention. In the cement clinker production plant 1 raw meal 2 is ground in a raw meal mill 3 and the ground raw meal is charged into a preheater string 4, where it is preheated in counter-current to the hot exhaust gases 9 coming from a rotary clinker kiln 5. The preheater string 4 comprises a plurality of interconnected preheaters, such as cyclone suspension-type preheaters. The preheated and optionally pre-calcined raw meal is then introduced into the rotary kiln 5, where it is calcined to obtain cement clinker. The clinker leaves the rotary kiln 5 and is cooled in a clinker cooler 6. The cooled clinker is charged into a cement mill 7, where the clinker is ground to a desired fineness, optionally together with other components of the final product, such as supplementary cementitious substances and gypsum.

In Fig. 1, the flow of solid material is shown with solid lines, while the flow of gasses is shown with dotted lines. It can be seen that cooling air 8 is introduced into the clinker cooler 6, where the air is heated in heat exchange with the clinker. The heated air leaving the clinker cooler 6 is introduced into the rotary kiln 5, where the preheated raw meal is calcined, i.e. decarbonated, while releasing CO₂. The CO₂ enriched exhaust gas 9 is introduced into the preheater string 4 in order to preheat the raw meal. The exhaust gas withdrawn from the preheater string 4 is introduced into a gas conditioning tower 10, where water may be injected in order to cool the exhaust gas. In a typical operation mode, the cooled exhaust gas may be introduced into the raw meal mill 3 via the line 13 for preheating the raw meal and further cooling the exhaust gas. The exhaust gas leaving the raw meal mill is loaded with fine particles of raw meal and is introduced into the main filter 11 for separating said fine particles from the exhaust gas. The exhaust gas is withdrawn from the main filter 11 at 12 and directed to an exhaust stack (not shown).

If the raw meal mill 3 is not in operation, the cooled exhaust gas coming from the gas conditioning tower 10 is directly led to the main filter 11 via the line 14, where cement kiln dust entrained from rotary kiln 5 is separated from the exhaust gas. The separated particles collected in the main filter 11 may be introduced into the cement mill 7 via the line 15 to be co-ground with the clinker.

In order to adapt such a typical configuration of a cement manufacturing plant for recycling waste material and for reducing the CO₂ footprint of the cement manufacturing process, the method of the invention provides for the introduction of carbonatable waste substances coming from an external source into the process. A storage container for the carbonatable substance is denoted by reference numeral 16. The storage container 16 may, e.g., contain a fine fraction obtained from crushed recycled concrete. The carbonatable material may optionally be introduced into a mill 17, such as a rotary mill via the line 18, in order to reduce the particle size of the carbonatable substance. The mill 17 may be fed by atmospheric gas or preferably by exhaust gas coming from the gas conditioning tower 10 via line 32, in order to perform carbonation within the mill 17.

During a period, in which the raw meal mill 3 is not operating, the ground carbonatable substance is introduced into the flow of CO₂ enriched exhaust gas via the line 20. More specifically, the ground carbonatable substance is introduced into the exhausts gas duct that connects the gas conditioning tower 10 with the main filter 11. Alternatively, the carbonatable substance is introduced into said duct directly via the line 19, i.e. without having been ground.

The carbonatable substance is entrained by the exhaust gas and is transported through the line 14 to enter the main filter 11. During its residence time in the duct that connects the gas conditioning tower 10 and the main filter 11 and during its residence time in the main filter 11, the carbonatable substance gets carbonated by reacting with the CO₂ contained in the exhaust gas, thereby reducing the CO₂ content of the exhaust gas. By carbonating the carbonatable substance, a synthetic carbonated mineral component is obtained that is withdrawn from the main filter 11 together with the other fine particles that are retained by the filter. The synthetic material component may be introduced into the cement mill 7 together with the other fine particles that are retained by the filter 11.

In order to increase the residence time of the carbonatable material in the CO₂ enriched exhaust gas so as to increase the carbonation rate, the material removed from the main filter 11 can be recirculated into the exhaust gas via the line 21.

In order to avoid that the synthetic carbonated mineral component is mixed with non-hydraulic dust, such as fine particles of raw meal, the carbonation process as described above is only carried out when the raw meal mill 3 is not in operation with cement raw meal. Introducing the carbonatable substance into the exhaust gas during mill shutdown enables to lower the exhaust gas temperature and reduce the water injection into the gas conditioning tower 10, and further enables the trapping of pollutants, typically mercury, sulfates, chlorides, or organic pollutants such as dioxins and furans, from the exhaust gas by absorbing the pollutants on the particles of the carbonatable substance.

Alternatively, during a period, in which the raw meal mill 3 is not operating to grind cement raw meal, it may be used to grind and carbonate the carbonatable substance. To this end, the carbonatable substance from container 16 is fed via line 20 into the exhausts gas duct that connects the gas conditioning tower 10 with the main filter 11 and is entrained via line 13 into the raw meal mill 3, in order to dry, grind and carbonate the carbonatable substance.

One part of the carbonated material is collected in the finished product circuit of the raw meal mill 3 and another part of the carbonated material that is entrained by the exhaust gas to the main filter 11 is collected there. The collected carbonated material is either transported directly to cement mill 7 or recirculated via line 14 to the main filter 11 or recirculated into the raw meal mill 3 or recirculated into the mill 17, in order to pursue carbonation.

In the alternative embodiment shown in Fig. 2, the raw meal mill 3 has a separate filter 22, so that a simultaneous operation of a) the raw meal mill 3 for grinding cement raw meal and of b) the carbonation process by entraining the carbonatable substance originating from container 16 into the main filter 11 may be realized.

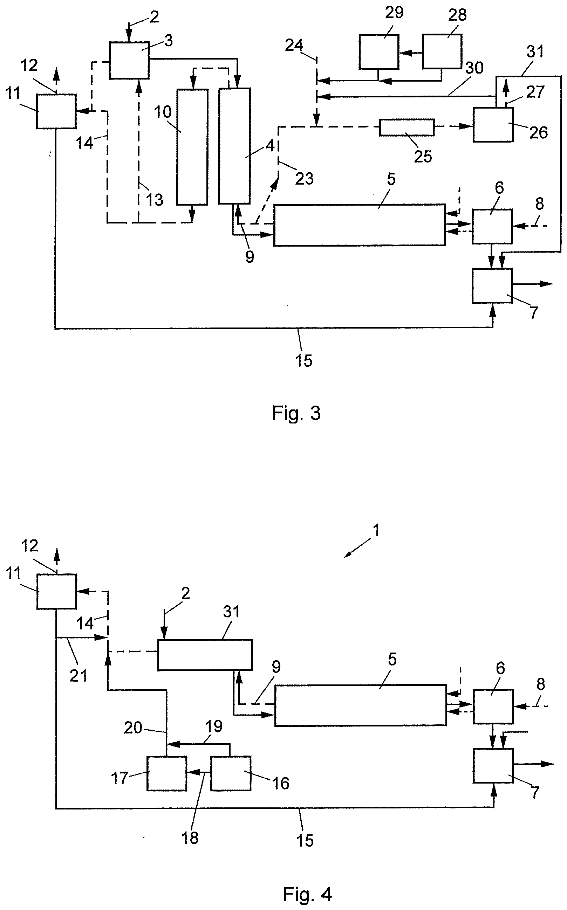

Fig. 3 shows another embodiment, wherein the carbonatable substance is introduced into a kiln bypass duct. As far as the same reference numerals are used as in Fig. 1 and 2, the same structural components are concerned. In the embodiment of Fig. 3 the carbonatable substance is introduced into the flow of exhaust gas in the kiln bypass duct 23, which is a duct for withdrawing a partial amount of the cement kiln dust loaded atmosphere at a location between the exhaust gas outlet of the rotary kiln 5 and the preheater string 4. The exhaust gas is cooled in a quenching chamber by injecting cooling air 24 into the kiln bypass duct 23. Further downstream, a second cooling installation 25 is optionally provided. The cooled mixture of cement kiln dust and exhaust gas is introduced into a bypass filter 26, where the cement kiln dust is separated from the exhaust gas 27. The exhaust gas is fed to an exhaust stack (not shown), while the cement kiln dust is conveyed to the cement mill 7 via the line 31.

A storage container for the carbonatable substance is denoted by reference numeral 28. The storage container 28 may, e.g., contain a fine fraction obtained from crushed recycled concrete. The carbonatable material may optionally be introduced into a mill 29, such as a rotary mill, in order to reduce the particle size of the carbonatable substance. The carbonatable substance coming from the mill 29 is added to the flow of cooling air 24 and introduced into the kiln bypass duct 23. Alternatively, the carbonatable substance is directly fed from the storage container 28 into the flow of cooling air 24, bypassing the mill 29.

The carbonatable substance is entrained by the exhaust gas and enters the bypass filter 26. During its residence time in the kiln bypass duct 23 and during its residence time in the bypass filter 26, the carbonatable substance gets carbonated by reacting with the CO₂ contained in the exhaust gas, thereby reducing the CO₂ content of the exhaust gas. By carbonating the carbonatable substance, a synthetic carbonated mineral component is obtained that is withdrawn from the bypass filter 26 together with the cement kiln dust that is retained by the filter. The synthetic material component may be introduced into the cement mill 7 together with the cement kiln dust that is retained by the filter 26.

In order to increase the residence time of the carbonatable material in the CO₂ enriched exhaust gas so as to increase the carbonation rate, the material removed from the bypass filter 26 can be recirculated into the exhaust gas via the line 30.

The method described with reference to Fig. 3 has the effect that the carbonatable substance is first carbonated at a high temperature of 500 to 600°C when being in the first cooling stage (cooling air 24) and is then carbonated at a low temperature of 100-300°C when travelling through the second cooling stage 25. Therefore, both temperature ranges that are optimal for the carbonation process can be used.

Additional benefits of adding the carbonatable substance into the kiln bypass duct include: the reduction of cooling/quenching air due the cooling effect brought about by the introduction of the carbonatable substance, and the reduction of the alkali and chloride content by dilution.

Fig. 4 shows a cement plant operating according to the semi-dry or semi-wet process, wherein the preheater is designed as a Lepol great preheater 31. The Lepol great preheater is designed to be fed with nodulised damp feed 2. In a Lepol kiln setup, the injection of the carbonatable substance can be done before the main filter 11, i.e. into the duct 14 that connects the exhaust gas outlet of the preheater 31 and the main filter 11. The synthetic carbonated mineral component is collected in the filter 11 together with cement kiln dust, which can be fed to the cement mill 7 via the line 15 and/or recirculated into the duct 14.

## Claims

1. A method of producing a synthetic carbonated mineral component in a cement manufacturing plant, wherein the cement manufacturing plant comprises a calcination device for producing Portland clinker by decarbonating cement raw meal while releasing a CO₂ enriched exhaust gas and further comprising an exhaust gas installation for directing a flow of the CO₂ enriched exhaust gas from the calcination device to an exhaust stack of the cement manufacturing plant, wherein the method comprises the steps of:
a) providing a carbonatable substance from an external source,
b) introducing the carbonatable substance into the exhaust gas installation for contacting the carbonatable substance with the CO₂ enriched exhaust gas,
c) carbonating the carbonatable substance by reacting the carbonatable substance with CO₂ contained in the CO₂ enriched exhaust gas, thereby obtaining the synthetic carbonated mineral component,
d) removing the synthetic carbonated mineral component from the exhaust gas installation.

2. Method according to claim 1, wherein the exhaust gas installation comprises a cement kiln bypass installation for extracting kiln bypass dust and exhaust gas from the calcination device, and a bypass filter connected to an exhaust end of the kiln bypass installation, wherein the step of introducing the carbonatable substance into the exhaust gas installation comprises introducing the carbonatable substance into the kiln bypass installation upstream of the bypass filter, and wherein the step of removing the synthetic carbonated mineral component from the exhaust gas installation comprises separating the synthetic material from the exhaust gas by means of said bypass filter and removing the synthetic material from the bypass filter.

3. Method according to claim 2, wherein the kiln bypass installation comprises a quenching chamber for cooling the kiln bypass dust and the exhaust gas, and wherein the carbonatable substance is introduced into the quenching chamber.

4. Method according to claim 3, wherein a quenching air duct is connected to the quenching chamber for introducing quenching air into the quenching chamber, and wherein the carbonatable substance is introduced into the quenching chamber via the quenching air duct.

5. Method according to claim 1, wherein the cement manufacturing plant comprises a preheater for preheating the cement raw meal in counter or cross current to the exhaust gas and optionally an exhaust gas conditioning tower for conditioning the exhaust gas coming from the preheater, and wherein the exhaust gas installation comprises an exhaust gas duct arranged downstream of the preheater or the exhaust gas conditioning tower for directing the exhaust gas to a main filter, and wherein the step of introducing the carbonatable substance into the exhaust gas installation comprises introducing the carbonatable substance into the exhaust gas flow at a location between the preheater and the main filter, and wherein the step of removing the synthetic carbonated mineral component from the exhaust gas installation comprises separating the synthetic material from the exhaust gas by means of said main filter and removing the synthetic material from the main filter.

6. Method according to claim 5, wherein the carbonatable substance is introduced into the exhaust gas conditioning tower.

7. Method according to claim 5, wherein the carbonatable substance is introduced into a mill fed by preheater exhaust gas, for drying, grinding and/or carbonating the carbonatable substance.

8. Method according to claim 5, wherein the carbonatable substance is introduced into the exhaust gas duct upstream of the main filter.

9. Method according to any one of claims 1 to 8 wherein the synthetic carbonated mineral component, after step d) is re-introduced into the exhaust gas installation and steps c) and d) are repeated.

10. Method according to any one of claims 1 to 9, carbonation is conducted until the CaCO₃ content of the carbonatable substance has increased by at least 5 wt.-%, preferably by at least 10 wt.-%.

11. Method according to any one of claims 1 to 10, wherein the synthetic carbonated mineral component is mixed with the Portland clinker coming from the calcination device.

12. Method according to claim 11, wherein the synthetic carbonated mineral component and the Portland clinker are co-ground in a cement mill of the cement manufacturing plant.

13. Method according to any one of claims 1 to 12, wherein the carbonatable substance is a mineral component having a total metal oxide content of at least 10 wt.-%, preferably at least 30 wt.-%.

14. Method according to any one of claims 1 to 13, wherein the carbonatable substance is a concrete mud that is obtained by recuperating mud from a decantation basin in a concrete ready-mix plant and reducing the water content of the mud.

15. Method according to any one of claims 1 to 12, wherein the carbonatable material is obtained from recycled concrete by crushing recycled concrete, separating a fine fraction of said crushed recycled concrete from a coarse fraction and using the fine fraction as said carbonatable material, wherein the fine fraction is composed of particles having a particle size of 0-4mm, preferably 0-3mm, in particular 0-2mm.
